# EUROPÄISCHE PATENTSCHRIFT

(11) **EP 1 328 477 B1**
(45) Veröffentlichungstag und Bekanntmachung des Hinweises auf die Patenterteilung: **30.03.2011**
(21) Anmeldenummer: 01985693.9
(22) Anmeldetag: 12.09.2001
(51) Int. Cl.: C02F 1/28, C01G 49/02, B01J 20/06, B01D 53/26

(54) **KONTAKT- UND ADSORBER-GRANULATE**
CONTACT AND ADSORBER GRANULATES
GRANULES DE CONTACT ET GRANULES ADSORBANTS

(30) Priorität: 26.09.2000 DE 10047996; 29.03.2001 DE 10115417; 18.06.2001 DE 10129306
(43) Veröffentlichungstag der Anmeldung: 23.07.2003
(73) Patentinhaber: LANXESS Deutschland GmbH, 51369 Leverkusen (DE)
(72) Erfinder: SCHLEGEL, Andreas, 47800 Krefeld (DE); BAILLY, Peter, 51519 Odenthal (DE); KISCHKEWITZ, Jürgen, 40883 Ratingen (DE); ROHBOCK, Klaus, 47906 Kempen (DE)
(86) Internationale Anmeldenummer: PCT/EP2001/010513
(87) Internationale Veröffentlichungsnummer: WO 2002/026630

(56) Entgegenhaltungen:
- EP-A- 0 704 500
- WO-A-83/03595
- WO-A-99/50182
- US-A- 4 366 090
- US-A- 4 459 370
- US-A- 4 481 087
- US-A- 4 515 756
- US-A- 5 368 640
- PATENT ABSTRACTS OF JAPAN vol. 1996, no. 07, 31. Juli 1996 (1996-07-31) & JP 08 059244 A (TODA KOGYO CORP), 5. März 1996 (1996-03-05)

## Beschreibung

Die vorliegende Erfindung betrifft ein Verfahren zur Herstellung eines Adsorptionsmittels/Reaktionsmittels, dadurch gekennzeichnet, dass
(a) Eisenoxihydroxide der Phase α-FeOOH
   in fester, halbfester oder suspendierter Form durch Zugabe von Fe(OH)₃ in Suspension oder in gelartiger Form mit variablem Wassergehalt vermischt werden, wobei das Fe(OH)₃ auch in situ aus Fe(III)salzlösungen und Neutralisation erzeugt werden kann,und dann
(b1) entweder die Suspension unter Erlangung eines festen Zustandes getrocknet und das feste Material anschließend mechanisch in die gewünschte Form und/oder Größe zerkleinert wird oder
(b2) die Suspension gegebenenfalls nach einer Vortrocknung im halbfesten Zustand einer mechanischen Formgebung und anschließenden (weiteren) Trocknung unter Erlangung eines festen Zustandes unterzogen wird,
gemäß dem vorgenannten Verfahren erhältliche Adsorptionsmittel/Reaktionsmittel als solche, die weiterhin dadurch gekennzeichnet sind, dass die Nadeln des α-FeOOH Typs von amorphen Schichten miteinander verklebt sind; Apparate enthaltend vorgenannte Adsorptionsmittel/Reaktionsmittel sowie die Verwendung der Adsorptionsmittel/Reaktionsmittel und der vorgenannten Apparate zur Reinigung von Gasen und Flüssigkeiten.

Kontakt- und Adsorber-Granulate, auch solche auf Basis von Eisenoxiden und/oder Eisenoxihydroxiden, sind bereits beschrieben worden. Sie werden überwiegend in kontinuierlichen Verfahren eingesetzt, wobei sie sich üblicherweise in turm- bzw. kolonnenartigen Apparaten befinden, die von dem zu behandelnden Medium durchströmt werden, und an der äußeren und inneren Oberfläche der Granulate finden die chemischen bzw. physikalischen Reaktions- bzw. Adsorptionsprozesse statt. Zu diesem Zweck können pulverförmige Materialien nicht eingesetzt werden weil sie sich in Fließrichtung des Mediums verdichten und dadurch den Strömungswiderstand bis zur Blockierung des Apparates erhöhen. Wird ein Apparat durch Rückspülung gereinigt (s. unten), werden große Mengen des Pulvers ausgetragen, gehen verloren bzw. führen zu einer nicht tolerierbaren Belastung des Abwassers.

Die strömenden Medien üben jedoch auch Kräfte auf die Granulate aus, die zur Abrasion und/oder zu einer Bewegung bis hin zu heftiger Agitation der Granulate führen können. Dadurch stoßen die Granulate aneinander, und infolgedessen entsteht unerwünschter Abrieb. Dieser führt zu Verlust von Kontakt- bzw. Adsorbermaterial und Verunreinigung des zu behandelnden Mediums.

Eisenoxid und -hydroxidhaltige Adsorptionsmittel/Reaktionsmittel sind z.B. im Bereich der Wasserreinigung oder Gasreinigung vorteilhaft einsetzbar. Bei der Wasserreinigung wird dieses Mittel in horizontal oder vertikal durchströmten Filtern bzw.

Adsorberkolonnen oder durch Zugabe zu dem zu behandelnden Wasser für die Abscheidung von gelösten, suspendierten oder emulgierten organischen oder anorganischen Phosphor-, Arsen-, Antimon-, Schwefel-, Selen-, Tellur-, Beryllium- sowie Cyano- und Schwermetallverbindungen aus beispielsweise Trinkwasser, Brauchwasser, industriellem, kommunalem Abwasser, Mineral-, Weih- und Heilwasser sowie Fluß-, Gartenteich- und Agrarwasser eingesetzt. Möglich ist auch der Einsatz in sogenannten reaktiven Wänden zur Abscheidung der genannten Schadstoffe aus Grundund Sickerwasserleitern von kontaminierten Standorten (Deponien).

Bei der Gasreinigung wird das Mittel in Adsorbern für die Bindung unerwünschter Bestandteile wie Schwefelwasserstoff, Mercaptanen und Blausäure, sowie sonstiger Phosphor-, Arsen-, Antimon-, Schwefel-, Selen-, Tellur-, sowie Cyano- und Schwermetallverbindungen in Abgasen eingesetzt. Es ist auch möglich, Gase wie HF, HCl, H₂S, SOₓ, NOₓ zu adsorbieren.

Möglich ist auch die Entfernung von Phosphor-, Arsen-, Antimon-, Selen-, Tellur-, sowie Cyano- und Schwermetallverbindungen aus Altölen und sonstigen kontaminierten organischen Lösungsmitteln.

Kontakt- und Adsorber-Granulate auf Basis von Eisenoxiden und/oder Eisenoxihydroxiden werden auch zur Katalyse chemischer Reaktionen in der Gasphase oder in der flüssigen Phase eingesetzt.

Es sind auch verschiedenartige Verfahren bekannt, um mit Hilfe von Adsorptionsmitteln die Spuren- und Schadstoffe aus wässrigen Systemen zu entfernen.

So wird der DE-A 3 120 891 ein Verfahren beschrieben, bei welchem für die Abtrennung vornehmlich von Phosphaten aus Oberflächenwasser eine Filtration über Aktivtonerde mit einer Körnung von 1 bis 3 mm erfolgt.

Zum Entfernen von Schadstoffen aus Wasser beschreibt die DE-A 3 800 873 ein Adsorptionsmittel auf der Basis von porösen Materialien wie zum Beispiel hydrophobierter Kreide mit feiner bis mittlerer Körnung.

In der DE-A 3 703 169 wird ein Verfahren zur Herstellung eines granulierten Filterstoffes zum Aufbereiten von Naturwasser offenbart. Das Adsorbens wird durch Gra- , nulierung einer wässrigen Suspension von Kaolin unter Zugabe von pulverförmigem Dolomit in einer Wirbelschicht hergestellt. Anschließend werden die Granalien bei 900 bis 950° C gebrannt.

Aus der DE-A 40 34 417 ist ein Verfahren zur Herstellung und Verwendung von hochreaktiven Reagenzien für die Abgas- und Abwasserreinigung bekannt. Beschrieben werden hier Gemische aus Ca(OH)₂ mit Zusätzen von Tonen, Steinmehlen, Flugstaub und Flugaschen, die porös hergestellt werden und eine Oberfläche von ca. 200 m²/g besitzen.

Die genannten Verfahren bzw. die hierzu eingesetzten Kontakte haben den gemeinsame Nachteil, dass die jeweilige für die selektive Adsorption von Inhaltsstoffen der zu reinigenden Medien verantwortliche Komponente, also das eigentliche Adsorbens, mit hohen Mengen an Zuschlagstoffen versetzt werden muss, um eine Formgebung zu Granulaten zuzulassen. Hierdurch erniedrigt sich in deutlichem Maße die Bindekapazität für die zu entfernenden Wasserschadstoffe. Außerdem ist die spätere Aufarbeitung bzw. Weiterverwertung des Materials problematisch, da die als Bindemittel eingesetzten Fremdstoffe erst wieder abgetrennt werden müssen.

In der DE-A 4 214 487 werden ein Verfahren und ein Reaktor zum Entfernen von Verunreinigungen aus Wasser beschrieben. Ein trichterförmiger Reaktor, in dem als Sorbens für Wasserverunreinigungen fein verteiltes Eisenhydroxid in flockiger Form eingesetzt wird, wird horizontal durchströmt. Nachteilig bei diesem Verfahren ist der Einsatz des flockenförmigen Eisenhydroxids, der aufgrund der geringen Dichteunterschiede zwischen Wasser und Eisenhydroxid dazu führt, dass ein derartiger Reaktor nur mit sehr geringen Strömungsgeschwindigkeiten betrieben werden kann und die Gefahr besteht, dass das Sorbens, gegebenenfalls bereits mit Schadstoffen beladen, gemeinsam mit dem Wasser aus dem Reaktor ausgetragen wird.

In JP-A 55 132 633 wird granulierter Rotschlamm als Nebenprodukt der Aluminiumproduktion als Adsorbens für Arsen beschrieben. Dieses setzt sich aus Fe₂O₃, Al₂O₃ und SiO₂ zusammen. Über die Stabilität der Granulate und über das Granulationsverfahren wird hierin nicht berichtet. Ein weiterer Nachteil bei diesem Adsorbens ist die mangelnde Konstanz in der Zusammensetzung des Produktes, die unsichere Verfügbarkeit und die mögliche Aluminium-Belastung des Trinkwassers. Da Aluminium im Verdacht steht, die Ausbildung der Alzheimer'schen Krankheit zu begünstigen, ist insbesondere die Kontamination mit diesem zu vermeiden.

In DE-A 19 826 186 wird ein Verfahren zur Herstellung eines Eisenhydroxid enthaltenden Adsorptionsmittels beschrieben. Eine wässrige Polymer-Dispersion wird in Eisenhydroxid in in Wasser dispergierbarer Form eingemischt. Diese Mischung wird dann entweder unter Erlangung eines festen Zustandes getrocknet und das feste Material anschließend mechanisch in die gewünschte Form und/oder Größe zerkleinert oder die Mischung wird gegebenenfalls nach einer Vortrocknung einer Formgebung unterzogen und anschließend unter Erlangung eines festen Zustandes endgetrocknet. Dadurch erhält man ein Material, bei welchem das Eisenhydroxid fest in das Polymer eingebettet ist und das eine hohe Bindekapazität für die üblicherweise in Abwässern oder Abgasen enthaltenen Schadstoffe aufweisen soll.

Nachteilig bei diesem Verfahren ist der Einsatz von organischen Bindemitteln, die das aufzubereitende Wasser durch Auswaschung und/oder Abrieb von Organika zusätzlich belasten. Zudem ist eine Beständigkeit bei längerem Einsatz des Adsorberverbunds nicht gewährleistet. Bakterien und anderen Mikroorganismen kann ein organisches Bindemittel zudem als Nährmedium dienen so dass die Gefahr der Besiedlung des Kontaktes mit Mikroorganismen und der Kontamination des Mediums durch dieselben besteht. Grundsätzlich ist die Anwesenheit von zur Herstellung der Adsorbentien erforderlichen artfremden Hilfsstoffen bei der Aufarbeitung, dem Rezyclieren bzw. der weiteren Verwertung verbrauchter Adsorbentien nachteilig, weil die Verwertung reiner Stoffe weniger problematisch ist als dies bei Stoffgemischen der Fall ist. So sind beispielsweise polymere Bindemittel bei der weiteren Verwertung von Adsorbermaterialien auf Eisenoxidbasis als Pigmente zur Anfärbung von Beton von Nachteil, da diese Bindemittel die Dispergierung des Pigments im Flüssigbeton behindern können.

In der DE-A 4 320 003 wird ein Verfahren zum Entfernen von gelöstem Arsen aus Grundwasser mittels kolloidem oder granuliertem Eisenhydroxid beschrieben. Für die Verwendung von feinen, suspendierten Eisen(III)hydroxid-Produkten wird hier empfohlen, die Eisenhydroxid-Suspension in Fettbettfilter, die mit gekörntem Material oder anderen Trägem mit hoher äußerer oder innerer Porosität gefüllt sind, einzubringen. Auch dieses Verfahren bringt den Nachteil mit sich, dass, bezogen auf das Adsorbens "Substrat + Eisenhydroxid", nur geringe spezifische Beladungskapazitäten erreichbar sind. Außerdem besteht nur eine schwache Bindung zwischen Substrat und Eisenhydroxid, so dass bei einer anschließenden Behandlung mit arsenhaltigem Wasser die Gefahr des Austrags von Eisenhydroxid bzw. Eisenarsenat besteht. In dieser Druckschrift wird weiterhin der Einsatz von granuliertem Eisenhydroxid als Adsorbermaterial für einen Festbettreaktor genannt. Die Herstellung des granulierten Eisenhydroxids erfolgt über eine Gefrier-Konditionierung (Gefriertrocknung) von durch Neutralisation von sauren Eisen(III)salz-Lösungen erhaltenem Eisenhydroxid bei Temperaturen unter minus 5° C. Dieser Herstellungsprozess ist in hohem Maße energieaufwendig und führt zu stark salzbelasteten Abwässern. Außerdem werden als Ergebnis dieses Herstellungsprozesses lediglich sehr kleine Körnchen mit geringer mechanischer Stabilität erhalten. Dies führt bei einem Einsatz in einem Festbettreaktor dazu, dass sich das Kornspektrum durch mechanische Abrasion der Teilchen im Verlaufe des Betriebs deutlich verringert, was wiederum zu Folge hat, dass feindisperse Partikel von beladenem oder unbeladenem Adsorptionsmittel aus dem Reaktor ausgetragen werden. Ein weiterer Nachteil dieser Granulate ist, dass die Adsorptionsfähigkeit gegenüber Arsenverbindungen erheblich vermindert wird, wenn die Granulate, z.B. durch längere Trockenstandzeit, Wasser verlieren.

Aus US-A-5,948,726 sind Adsober/Binder-Systeme bekannt geworden, die erhalten werden, indem einer Mischung aus (a) einem vemetzungsfähigen Binder aus colloidalen Metall- oder Metalloidoxiden, (b) oxidischen Adsorbentien wie Metalloxiden und (c) einer Säure eine ausreichend große Menge an Wasser entzogen wird, so dass die Komponenten (a) und (b) unter Bildung eines Adsorbens/Binder-Systems vernetzen. Ausweislich der Ausführungsbeispiele wird als Binder colloidale Tonerde bzw. Aluminiumoxid eingesetzt.

Nachteilig an diesen Zusammensetzungen ist der bei ihrer Herstellung notwendige Einsatz von Säure (Sp. 9, Z. 4) sowie der Umstand, dass es sich nicht um reine, sondern heterogene Stoffe handelt, was sowohl für die Herstellung, Regenerierung, Entsorgung bzw. Endlagerung derartiger Adsorber, z.B. auf einer Deponie, unerwünscht ist. In den Offenbarungsumfang dieser Schrift sollen auch Adsorber fallen, die zur Adsorption von Arsen geeignet sind; konkrete Beispiele werden jedoch nicht vorgestellt. Bekanntlich ist Aluminiumoxid hinsichtlich der Adsorptionskraft für Arsen den Eisenoxiden deutlich unterlegen.

Zur Wasseraufbereitung werden bevorzugt kontinuierlich betriebene Adsorber eingesetzt, die häufig in Gruppen parallel angeordnet betrieben werden. Um beispielsweise Trinkwasser von organischen Verunreinigungen zu befreien, werden derartige Adsorber mit Aktivkohle beschickt. Zu Spitzenverbrauchszeiten werden dann die vorhandenen Adsorber parallel betrieben, um die Strömungsgeschwindigkeit nicht über das auslegungsbedingte Maximum hinaus ansteigen zu lassen. Während Zeiten niedrigeren Wasserverbrauchs werden einzelne Adsorber aus dem Betrieb genommen und können währenddessen beispielsweise gewartet werden, wobei das Adsorbermaterial besonderen Belastungen ausgesetzt ist, wie weiter unten näher ausgeführt wird. Auch der Einsatz von Granulaten, die man durch Kompaktieren von z.B. pulverförmigem Eisenoxid durch Anwendung hoher Linienkräfte erzeugen kann, wurde bereits erwogen. Derartige Granulate sind bereits beschrieben worden, um Flüssigbeton homogen anzufärben. Die Anwendung hoher Linienkräfte beim Kompaktieren ist in hohem Maße energie- und kostenaufwendig und die Stabilität der Kompaktate ist bei längerem Einsatz in Adsorbern ungenügend. Daher kommen derartige für den Einsatz in z.B. Adsorbern, insbesondere kontinuierlich betriebenen, bei der Reinigung von Wasser nur bedingt in Betracht. Insbesondere bei der Wartung bzw. Reinigung der Adsorberanlagen durch Rückspülung (s. unten) verlieren derartige Granulate durch die damit verbundene Agitation derselben große Mengen Substanz. Das Rückspül-Abwasser ist durch den Abrieb stark eingetrübt. Dies ist aus mehreren Gründen nicht akzeptabel: Zunächst einmal geht Adsorbermaterial verloren, welches nach einer längen Standzeit hoch mit Verunreinigungen beladen und daher toxikologisch bedenklich ist. Dann wird der Abwasserstrom mit dem Abrieb belastet, der sedimentieren kann und so zur Beeinträchtigung der Rohrleitungssysteme führt und letztlich die Kläranlage physikalisch und toxikologisch unerwünscht belastet, um nur einige Gründe zu nennen.

Der vorliegenden Erfindung lag daher die Aufgabe zugrunde, ein Adsorptionsmittel/Reaktionsmittel auf Basis von Eisen-Sauerstoff-Verbindungen in stückiger Form bereitzustellen, das hohe mechanische Stabilität verbunden mit einem hohen Bindevermögen für in Flüssigkeiten und Gasen enthaltenen Schadstoffe aufweist ohne dass organische Bindemittel oder anorganische Fremdstoffbindemittel zur Erlangung ausreichender mechanischer Stabilität eingesetzt werden müssen bzw. Anlagen, die mit derartigen Medien betrieben werden.

Die erfindungsgemäßen Kontakte bzw. Adsorptionsmittel/Reaktionsmittel, deren Bereitstellung, deren Verwendung sowie mit diesen beschickte Apparate lösen diese komplexe Aufgabe.

Hierbei handelt es sich um fest in Fe(OH)₃-Polymer eingebettetes Eisen oxihydroxid, ein Material, das der α-FeOOH phase- wie Untersuchungen gezeigt haben - eine hohe Bindekapazität für die üblicherweise in Abwässern oder Abgasen enthaltenen Schadstoffe aufweist und ohne Zusatz organischer Bindemittel oder anorganischer Fremdstoffe mit Bindemittelfunktion bereits eine ausreichende mechanische und hydraulische Stabilität aufweist.

Da dieses Material frei von Fremdstoff-Bindemitteln ist, hat es gegenüber Adsorbern des Stand der Technik zudem den Vorteil, dass es, erforderlichenfalls nach der Ablösung bzw. Entfernung der adsorbierten Schadstoffe, als ganzes entsorgt oder anderen Anwendungen zugeführt weren kann, so zum Beispiel nach Aufmahlung für die Einfärbung von Beton und anderen Baustoffen sowie üblichen Pigmentanwendungen in Kunststoffen, Farben und Lacken oder zur Einfärbung von anderen Substraten wie Rindenmulch oder geschreddertem Holz.

Das erfindungsgemäße Material ist erhältlich, indem Eisenoxihydroxid der α-FeOOH phase in fester, halbfester oder suspendierter Form durch Zugabe von Fe(OH)₃ in Suspension oder in gelartiger Form mit variablem Wassergehalt vermischt werden und diese Mischung dann vollständig oder unter Beibehaltung eines gewissen Wassergehaltes beispielsweise durch Filtration oder Verdampfung entwässert wird und das feste oder halbfeste Material anschließend mechanisch in die gewünschte Form und/oder Größe zerkleinert wird, oder die Dispersion wird, gegebenenfalls nach einer Vortrocknung im halbfesten Zustand, einer mechanischen Formgebung und anschließenden (weiteren) Trocknung unter Erlangung eines festen Zustandes unterzogen. Dabei wird das Eisenoxihydroxid fest in das Fe(OH)₃-Polymer eingebettet. Das Fe(OH)₃ kann auch in situ aus Fe(III)salzlösungen und Neutralisation erzeugt werden. Vorzugsweise wird das Restalkali aus dem Herstellungsprozeß des suspendierten Pigments zu diesem Zweck mit einer äquivalenten Menge Fe(III)-Salz umgesetzt.

Das Eisenhydroxid Fe(OH)₃ ist im Ausgangszustand vorzugsweise wäßrig-pastös, wobei die Paste fast beliebige Wassergehalte aufweisen kann, in der Regel zwischen 10-90 Gew.-%, vorzugsweise zwischen 40 bis 70 Gew.-%. Es kann jedoch auch frisch hergestelltes Eisenhydroxid Fe(OH)₃ verwendet werden, das durch Fällung aus Eisen(III)salzlösungen gewonnen wurde.

Die Entwässerung durch Verdampfung wird vorzugsweise dann angewendet, wenn die zu entwässernden Suspensionen weitgehend salzfrei sind und/oder an die erzeugten Endprodukte weniger hohe Anforderunge an die mechanische Festigkeit im Betrieb gestellt werden.

Alternativ entwässert man durch Filtration. Dabei ist es möglich, zur Verbesserung des Filtrationsverhaltens der Suspensionen übliche filtrationsverbessemde Maßnahmen anzuwenden wie sie z.B. in Solid-Liquid Filtration and Separation Technology, A. Rushton, A.S., Ward RG., Holdich, 2. Aufl. 2000, Wiley-VCH, Weinheim sowie Handbuch der Industiellen Fest/Flüssig-Filtration, H. Gasper, D. Öchsle, E. Pongratz, 2. Aufl. 2000, Wiley-VCH Weinheim beschrieben sind. So können den Suspensionen zum Beispiel Flockungsmittel zugesetzt werden.

Die erfindungsgemäßen Adsorptionsmittel/Reatitionsmittel können einer Trocknung an Luft, und/oder im Vakuum, und/oder im Trockenschrank und/oder auf Bandtrocknern oder in Sprühtrocknern bei Temperaturen im Bereich von 5 bis 300°C unterzogen werden. Auch eine Gefriertrocknung des Materials ist möglich.

Die erfindungsgemäßen Adsorptionsmittel/Reaktionsmittel haben vorzugsweise einen Restwassergehalt von weniger als 20 Gew.-%.

Die Zerkleinerung des Materials erfolgt vorzugsweise durch Aufmahlung auf Körnungen von einer Größe im Bereich zwischen 0.5 und 20 mm. Die mechanische Formgebung des halbfesten Materials findet vorzugsweise in einer Granulier- bzw. Pelletieranlage oder in einer Strangpresse statt, wobei Formkörper mit einer Größe im Bereich von 0.5 bis 20 mm Durchmesser bzw. Länge erhalten werden können.

Es wurde gefunden, dass die so erhaltenen Stücke bzw. Granulate eine hohe Bindekapazität für in Gewässern, Flüssigkeiten oder Gasen enthaltene Schadstoffe besitzen und sie zudem eine ausreichend hohe Stabilität gegenüber strömenden Medien hinsichtlich mechanischer oder hydraulischer Beanspruchung besitzen.

Insbesondere überrascht, dass sich die mit Fe(OH)₃ behandelten Eisenoxihydroxide beim Trockenen in sehr harte Agglomerate verfestigen, die ohne Zusatz von Bindemittel eine hohe mechanische Abriebsfestigkeit und eine hohe hydraulische Stabilität gegenüber dem Kontakt mit durchströmenden Wasser besitzen, und die ein hohes Bindevermögen für die in dem Wasser enthaltenen Schad- und Spurenstoffe haben.

Zum erfindungsgemäßen Einsatz eignen sich Eisenoxihydroxidpigmente Goethit) . Die Herstellung von Eisenoxidpigmenten ist Stand der Technik, sie werden durch Fällungs- und Oxidations- oder Penniman-Reaktionen aus Eisen(II)salzlösungen und das Eisenhydroxid durch Fällung aus Eisen(III)salzlösungen erhalten.

Das Produkt besitzt BET-Oberflächen von 50 bis 500 m²/g, bevorzugt von 80 bis 200 m²/g.

Die Primärteilchengröße wurde aus rasterelektronenmikroskopischen Aufnahmen z. B. bei einer Vergrößerung 60000:1 durch Ausmessen bestimmt (Gerät: XL30 ESEM FEG, Fa. Philips). Sind die Primärteilchen nadelförmig, wie z. B. in der Phase von α-FeOOH, lässt sich als Mass für die Teilchengröße die Nadelbreite angeben. Man beobachtet bei nanoteiligen α-FeOOH- Teilchen Nadelbreiten von bis zu 100 nm, in der Hauptsache jedoch zwischen 4 und 50 nm. α-FeOOH Primärteilchen haben üblicherweise ein Länge:Breite-Verhältnis von 5:1 bis zu 50:1, typischerweise von 5:1 bis 20:1. Durch Dotierungen oder spezielle Reaktionsführung lassen sich die Nadelformen jedoch in ihrem Länge:Breite-Verhältnis variieren.

Durch Mischung von Fe(OH)₃ mit Eisen(oxi)hydroxiden erkennt man auf den rasterelektronenmikroskopischen Aufnahmen, das Vorliegen der gegebenen Pigment- bzw. Keim-Partikel in ihrer bekannten Teilchenmorphologie, welche durch das amorphe Fe(OH)₃-Polymer untereinander zusammengehalten werden bzw. miteinander verklebt sind.

Gelbe Eisenoxihydroxidpigmente werden in der Regel durch Fällung von Eisen(II)-hydroxiden oder -carbonaten aus entsprechenden Eisen(II)-salzlösungen wie z. B. FeSO₄, FeCl₂ in Reinform oder als Beizereilösungen im sauren oder alkalischen pH-Bereich und anschließender Oxidation zu Eisen(III)-oxihydroxiden synthetisiert (s. u. a. G. Buxbaum, Industrial Inorganic Pigments, VCH Weinheim, 2. Auflage, 1998, S. 231ff).. Die Oxidation des zweiwertigen zum dreiwertigen Eisen erfolgt bevorzugt mit Luft, dabei ist eine intensive Begasung von Vorteil. Auch die Oxidation mit H₂O₂ führt zu Eisenoxihydroxiden. Als alkalisches Fällungsmittel wird bevorzugt NaOH eingesetzt. Aber auch andere Fällungsmittel, wie KOH, Na₂CO₃, K₂CO₃, CaO, Ca(OH)₂, CaCO₃, NH₃, NH₄OH, MgO und/ oder MgCO₃ können verwendet werden.

Durch geeignete Wahl der Fäll- und Oxidationsbedingungen lässt sicheine nanoteilige α-, Phase von Eisenoxihydroxiden darstellen, die eine hohe spezifische Oberfläche aufweisen, so dass die Nanoteilchen im trockenen Zustand zusammenbacken und in zerkleinerter Form eine hohe Stabilität gegenüber mechanischem und fluidmechanischen Abrieb besitzen. Um die gefällten Pigmente in Richtung der notwendigen hohen Feinteiligkeit zu steuern, werden die Fällungen, Z. B von gelbem α-FeOOH, wie in den Patenten US-A 2 558 303 und US-A 2 558 304 beschrieben, im alkalischen pH-Bereich mit Alkalicarbonaten als Fällungsmittel durchgeführt und in der Regel Modifikatoren zugesetzt, wie z.B. SiO₂, Zink-, Aluminium- oder Magnesiumsalze, Hydroxicarbonsäuren, Phosphate, Metaphosphate. So hergestellte Produkte sind in US-A 2 558 302 beschrieben. Derartige Keimmodifikatoren behindern die spätere Aufarbeitung, Rezyclierung oder weitere andersartige Verwendung der erfindungsgemäßen Adsorbentien nicht. Bei den Fällverfahren im wässrigen Medium führen nach bisherigem Wissen Fällungen im alkalischen Milieu zu weniger hart agglomerierten Pulvern als solche im sauren.

Keimmodifikatoren haben jedoch u. a. den Vorteil, dass man selbst bei höheren Reaktionstemperaturen trotzdem eine asreichende Feinteiligkeit erreichen kann.

Gegenüber dem Stand der Technik handelt es sich bei den beschriebenen Produkten, dem Verfahren zur ihrer Herstellung und ihrer Verwendung um eine Verbesserung. Die erfindungsgemäßen Adsorptionsmittel/Reaktionsmittel sind im Gegensatz zu solchen des Stands der Technik erheblich belastbarer und weisen somit eine viel größere Abriebsstabilität gegenüber mechanischer und hydraulischer Beanspruchung auf. Sie können direkt als solche eingesetzt werden. Selbst auf das Zerkleinern oder Schroten der zunächst erhaltenen rohen Trockensubstanz aus Filterkuchen oder Strangpressen kann z.B. bei der Anwendung in Adsorberanlagen zur Wasserreinigung verzichtet werden, da sich die groben Stücke bei ihrem Kontakt mit Wasser selbständig zerkleinern. Hierbei entsteht eine statistische Korngrößenverteilung, jedoch keine Partikel einer Größe, die in nennenswertem Maße durch das strömende Medium aus dem Adsorber ausgetragen werden.

Auf eine separate Granulierung, wie sie beim Einsatz herkömmlicher Eisenoxihydroxiden in Form (rieselfähiger) Pulver erforderlich wäre, entweder unter Zuhilfenahme substanzfremder Bindmittel oder höchster Linienkräfte beim Kompaktieren, kann völlig verzichtet werden.

Als andere Methode, Granulate zu erzeugen, hat sich die Granulierung einer halbfeuchten Paste bewährt. Dabei formt man Pellets bzw. Stränge aus einer halbfesten Paste z. B. Mittels eines einfachen Lochblechs, einer Walzenpresse oder eines Extruders und trocknet diese entweder gleich oder bringt diese Extrudate mittels eines Sphäronizers zusätzlich in eine Kugel- oder Granulatform. Die noch feuchten Kügelchen bzw. granulate können im Nachhinein auf einen beliebigen Feuchtigkeitsgehalt nachgetrocknet werden. Damit die Granulate nicht zusammenbacken, empfiehlt sich ein Restfeuchtegehalt von < 50 %. Eine solche Kugelform kann für den Einsatz in Festbettadsorbem wegen der dadurch besseren Schüttung im Adsorberbehälter gegenüber geschroteten Granulaten oder Pellets in Strangform von Vorteil sein.

Die erfindungsgemäß einzusetzenden Mengen an Eisenoxihydroxiden bzw. Eisenoxiden einerseits und Eisenhydroxid andererseits werden durch die an das erfindungsgemäße Produkt gestellten Anforderungen bezüglich seiner mechanischen Stabilität und Abriebfestigkeit bestimmt. Ein höherer Gehalt an (pulverförmigen) Pigmenten wird in der Regel zwar die mechanische Festigkeit der erfindungsgemäßen Produkte verringern, jedoch wird gegebenenfalls die Filtration der Suspensionen erleichtert. Der auf dem jeweiligen Anwendungsgebiet tätige Fachmann wird durch wenige orientierende Versuche das für seinen Anwendungszweck optimale Mischungsverhältnis ermitteln können.

Besonders bevorzugt werden die erfindungsgemäßen Adsorptionsmittel/Reaktionsmittel bei der Reinigung von Flüssigkeiten, insbesondere zur Entfernung von Schwermetallen, eingesetzt. Eine in diesem technischen Gebiet bevorzugte Anwendung ist die Dekontamination von Wasser, insbesondere von Trinkwasser. In jüngster Zeit wird der Entfernung von Arsen aus Trinkwasser besondere Aufmerksamkeit gewidmet. Die erfindungsgemäβen Granulate eignen sich hierzu hervorragend, da selbst die niedrigen von der US-Behörde EPA festgesetzten Grenzwerte durch die Verwendung der erfindungsgemäβen Granulate nicht nur eingehalten, sondern sogar unterschritten werden können.

Dazu können die erfindungsgeäβen Adsorptionsmitte/Reaktionsmittel in herkömmliche Adsorberapparaten eingesetzt werden, wie sie derzeit schon, z.B. mit Aktivkohle beschickt, zur Entfernung von Schadstoffen anderer Art in Gebrauch sind. Ein Batchbetrieb, beispielsweise in Zisternen oder ähnlichen Behältnissen, die gegebenenfals mit Rührwerken ausgestattet sind, ist zwar auch möglich. Der Einsatz in kontinuierlich betriebenen Anlagen wie Durchfluß-Adsorbern ist jedoch bevorzugt.

Da zur Trinkwasser aufzubereitendes Rohwasser üblicherweise auch organische Verunreinigungen wie Algen und ähnliche Organismen enthält, belegt sich die Oberfläche von Adsorbern, insbesondere die äußere Oberfläche von granulatförmigem Adsorbens, während des Einsatzes mit zumeist schleimigen Ablagerungen, die den Zutritt des Wassers und damit die Adsorption von zu entfernenden Inhaltsstoffen erschweren oder gar verhindern. Aus diesem Grund werden die Adsorber-Apparate von Zeit zu Zeit mit Wasser rückgespült, was vorzugsweise während Zeiten niedrigen Wasserverbrauchs (s. oben) an einzelnen aus dem Betrieb genommenen Apparaten durchgeführt wird. Hierbei wird das Adsorbens aufgewirbelt, und durch die hiermit verbundene mechanische Beanspruchung der Oberfläche wird der unerwünschte Belag entfernt und entgegen der Fließrichtung im Nutzbetrieb ausgetragen. Das Waschwasser wird üblicherweise einer Kläranlage zugeführt. Hierbei bewähren sich die erfindungsgemäßen Adsorbentien ganz besonders gut, da deren hohe Festigkeit eine Reinigung in kurzer Zeit ermöglicht, ohne dass nennenswerte Verluste an Adsorbermaterial zu verzeichnen wären bzw. das dem Abwasser zugeführte Rückspülwasser reich an ausgetragenem Adsorbermaterial, gegebenenfalls schon hoch mit Schwermetallen beladen, ist.

Da die erfindungsgemäßen Granulate frei von artfremden Bindmitteln sind, ist das Material nach Gebrauch vergleichsweise einfach zu entsorgen. So kann das Adsorbierte Arsen z.B. in speziellen Apparaturen thermisch oder chemisch entfernt werden, und man erhält als reinen Stoff ein Eisenoxidpigment, welches entweder zum Zweck der gleichen Anwendung rezycliert oder herkömmlichen Pigmentanwendungen zugeführt werden kann. Je nach Anwendung und gesetzlichen Bestimmungen kann der Adsorberinhalt auch ohne die vorherige Entfernung der Schwermetalle beispielsweise als Pigment zur Einfärbung dauerhafter Konstruktionsmaterialien wie Beton verwendet werden, da die dem Trinkwasser entzogenen Schwermetalle auf diese Weise dauerhaft immobilisiert und dem Wasserkreislauf entzogen werden.

Daher sind auch Wasseraufbereitungsanlagen bzw. Wasserwerke, in denen mit den erfindungsgemäßen Granulaten beschickte Apparate betrieben werden ebenso Gegenstand der vorliegenden Erfindung wie Verfahren zur Dekontamination von Wasser unter Verwendung derartiger Apparate sowie derartige Apparate selbst.

Die Bestimmung der spezifischen Oberfläche der erfindungsgemäßen Produkte nach BET erfolgt über das Trägergasverfahren (He:N₂=90:10) nach der Einpunkt-Methode, gemäß DIN 66131 (1993). Vor der Messung wird die Probe 1 h bei 140°C im trockenen Stickstoffstrom ausgeheizt.

Zur Messung der Adsorption von Arsen(III) und Arsen(V) werden in einer 5L PE-Flasche über einen bestimmten Zeitraum 3L einer wässrigen Lösung von NaAsO₂ oder Na₂HAsO₄ mit der jeweils angegebenen Ausgangskonzentration von ca. 2-3 mg/L Arsen mit 3 g der zu untersuchenden Probe behandelt und dabei die Flasche auf rotierenden Walzen in Bewegung versetzt. Die Adsorptionsgeschwindigkeit von As-Ionen auf Eisenhydroxid über diesen bestimmten Zeitraum, z.B. eine Stunde, wird angegeben mit mg(As^{3+/5+})/g(FeOOH)•h aus der Differenz zu den in Lösung verbleibenden As^{3+/5+}-Ionen.

Zur Messung der Adsorption von Sb³⁺, Sb⁵⁺, Hg²⁺, Pb²⁺, Cr⁶⁺, Cd²⁺-Ionen verfährt man nach dem gleichen Muster, und zwar stellt man sich die gewünschten Konzentrationen durch Auflösen entsprechender Mengen von Sb₂O₃, KSb(OH)₆, PbCl₂, NaCrO₄, CdCl₂ in H₂O her und stellt den pH-Wert auf 7-9 ein.

Die As-, Sb-, Cd-, Cr-, Hg- bzw. Pb-Gehalte des beladenen Eisenoxihydroxids bzw. der Lösungen bestimmt man über die Massenspektrometrie (ICP-MS) gemäß DIN 38406-29 (1999) oder über optische Emissionsspektroskopie (ICP-OES) gemäß EN-ISO 11885 (1998) mit jeweils induktiv gekoppeltem Plasma als Anregungseinheit.

Die Beurteilung der mechanischen und hydraulischen Abriebsfestigkeit erfolgte nach folgender Methode: 10 g des zu untersuchenden Granulats mit Korngrößen >0.1 mm wurden in einem 500 mL Erlenmeyerkolben mit 150 mL VE-Wasser versetzt und auf einer Schüttelmaschine LabShaker (Modell Kühner, Fa. Braun) über einen Zeitraum von 30 Minuten mit 250 Umdrehungen/Minute in Rotation versetzt. Anschließend wurde von der Suspension mittels eines Siebs der Anteil >0.1 mm isoliert, getrocknet und gewogen. Das Gewichtsverhältnis zwischen Auswaage und Einwaage bestimmt den Abriebswert in %.

Die Erfindung wird im Folgenden anhand eines Beispiels näher erläutert. Das Beispiel soll der Illustration des Verfahrens dienen und stellt keine Einschränkung dar.

### Bispiel

525 g einer Suspension eines nadelförmigen α-FeOOH-Pigmentpulvers (50 g/L FeOOH, Bayferrox®920, Bayer AG, Leverkusen, DE) wurden mit 800 g einer wässrigen Lösung von FeCl₃ (100 g/L) versetzt und durch Zugabe von 247 g einer wässrigen naOH-Lösung (24 %) ein Eisenhydroxid auf das Pigment aufgefällt. Die Suspension wurde über eine Filternutsche filtriert, der Filterkuchen auf eine Restleitfähigkeit des Filtrats von < 1mS/cm gewaschen und der Filterkuchen anschließend im Trokkenschrank bei 75 °C getrocknet. Das sehr harte Material wurde anschließend auf Granulate mit Korngrößen zwischen 0.2 und 2 mm geschrotet. Die spezifische Oberfläche nach BET betrug 64 m²/g. Aus der rasterelektronenmikroskopischen Aufnahme z. B. mit der Vergrößerung von 60000:1 sieht man, dass die Nadeln des α-FeOOH-Typs von amorphen Schichten miteinander verklebt bzw. agglomeriert sind. Die Adsorptionsgeschwindigkeit bezüglich einer wässrigen NaAsO₂-Lösung mit einer Ausgangskonzentration von 2.9 mg/L (As³⁺) betrug 1.8 mg(As³⁺/g(FeOOH)•h, bezüglich einer Na₂HAsO₄-Lösung mit einer Ausgangskonzentration von 2.8 mg/L (As⁵⁺) betrug 1.6 mg(As⁵⁺)/g(FeOOH)•h.

## Patentansprüche

1. Verfahren zur Herstellung eines Adsorptionsmittels/Reaktionsmittels , **dadurch gekennzeichnet, dass**
(a) Eisenoxihydroxide der Phase α-FeOOH
in fester, halbfester oder suspendierter Form durch Zugabe von Fe(OH)₃ in Suspension oder in gelartiger Form mit variablem Wassergehalt vermischt werden, wobei das Fe(OH)₃ auch in situ aus Fe(III)salzlösungen und Neutralisation
erzeugt werden kann, und dann
(b1) entweder die Suspension unter Erlangung eines festen Zustandes getrocknet und das feste Material anschließend mechanisch in die gewünschte Form und/oder Größe zerkleinert wird oder
(b2) die Suspension gegebenenfalls nach einer Vortrocknung im halbfesten Zustand einer mechanischen Formgebung und anschließenden (weiteren) Trocknung unter Erlangung eines festen Zustandes unterzogen wird.

2. Verfahren gemäß Anspruch 1, **dadurch gekennzeichnet, dass** in Schritt a) als Eisenoxihydroxide der Phase α-FeOOH gelbe Eisenoxihydroxidpigmente eingesetzt werden, die durch Fällung von Eisen(II)-hydroxiden oder -carbonaten aus entsprechenden Eisen(II)-salzlösungen in Reinform oder als Beizereilösungen im sauren oder alkalischen pH-Bereich un anschließender Oxidation zu Eisen(III)-oxihydroxien synthetisiert werden.

3. Verfahren nach Ansprüchen 1 oder 2, **dadurch gekennzeichnet, dass** zur Fällung des Fe(OH)₃ Fe³⁺-Salze aus der Reihe der Carbonate, Chloride, Fluoride, Nitrate, Sulfate, Sulfite verwendet werden.

4. Stückiges Adsorptionsmittel, hergestellt nach einem Verfahren gemäß Ansprüchen 1 bis 3, **dadurch gekennzeichnet, dass** Nadeln des -FeOOH Typs von amorphen Schichten miteinander verklebt sind.

5. Stückiges Adsorptionsmittel/Reaktionsmittel gemäß Anspruch 4 **dadurch gekennzeichnet, dass** es sich bei dem stückigen Adsorptionsmittel/ Reaktionsmittel um Formkörper handelt.

6. Von Medien durchströmbare Apparate, **dadurch gekennzeichnet, dass** sie stückiges Adsorptionsmittel/Reaktionsmittel gemäß den Ansprüchen 4 und 5 enthalten.

7. Von Medien durchströmbare Apparate gemäß Anspruch 6, **dadurch gekennzeichnet, dass** es sich bei dem Apparat um einen Durchflussadsorber handelt.

8. Wasseraufbereitungsanlagen umfassend Apparate gemäß Ansprüchen 6 oder 7.

9. Wasserwerke umfassend Wasseraufbereitungsanlagen gemäß Anspruch 8.

10. Verwendung der stückigen Adsorptionsmittel/Reaktionsmittel gemäß der Ansprüchen 4 und 5 4 und den Apparaten gemäß Ansprüchen 6 und 7 zur Reinigung von Gasen oder Flussigheilen.

11. Verwendung der stückigen Adsorptionsmittel/Reaktionsmittel gemäß den Ansprüchen 4 und 5, den Apparaten gemäß Ansprüchen 6 und 7 zur Wasseraufbereitung.

12. Verwendung der stückigen Adsorptionsmittel/Reaktionsmittel gemäß den Aüsprüchen 4 und 5 den Apparaten gemäß Ansprüchen 6 und 7 zur Entfernung von Schwermetallen, sowie Phosphor-, Antimon-, Beryllium-, Selen-, Tellur-, Cadmium-, Chrom- sowie Cyanoverbindungen aus Wasser.

13. Verwendung der stückigen Adsorptionsmittel/Reaktionsmittel gemäß den Ansprüchen 4 und 5, den Apparaten gemäß Ansprüchen 6 und 7 den wasserfbereitungsanlagen gemäß Anspruch 8 sowie den wasserweiten gemäβ Anspruch 9 zur Entfernung von Arsenverbindungen aus Wasser.

## Claims

1. Process for producing an adsorption medium/reaction medium, **characterized in that**
(a) iron oxyhydroxides of the phase α-FeOOH are mixed in solid, semisolid or suspended form by adding Fe(OH)₃ in suspension or gel-like form having a variable water content, wherein the Fe(OH)₃ can also be generated in situ from Fe(III) salt solutions and neutralization, and then
(b1) either the suspension is dried, achieving a solid state, and the solid material is then mechanically comminuted into the desired shape and/or size or
(b2) the suspension, if appropriate after a predrying, is subjected in the semisolid state to a mechanical shaping and subsequent (further) drying achieving a solid state.

2. Process according to Claim 1, **characterized in that**, in step a), the iron oxyhydroxides of the phase α-FeOOH used are yellow iron oxyhydroxide pigments that are synthesized by precipitating iron(II) hydroxides or carbonates from corresponding iron(II) salt solutions in pure form or as pickling solutions in the acidic or alkaline pH range and subsequent oxidation to give iron(III) oxyhydroxides.

3. Process according to Claim 1 or 2, **characterized in that** Fe³⁺ salts from the series of carbonates, chlorides, fluorides, nitrates, sulphates, sulphites are used for precipitating the Fe(OH)₃.

4. Adsorption medium in piece form produced by a process according to Claims 1 to 3, **characterized in that** needles of the α-FeOOH type are glued together by amorphous layers.

5. Adsorption medium/reaction medium in piece form according to Claim 4, **characterized in that** the adsorption medium/reaction medium in piece form is a shaped body.

6. Apparatuses through which media can flow, **characterized in that** they comprise adsorption medium/reaction medium in piece form according to Claims 4 and 5.

7. Apparatuses through which media can flow according to Claim 6, **characterized in that** the apparatus is a continuous-flow adsorber.

8. Water treatment plants comprising apparatuses according to Claim 6 or 7.

9. Waterworks comprising water treatment plants according to Claim 8.

10. Use of the adsorption media/reaction media in piece form according to Claims 4 and 5 and the apparatuses according to Claims 6 and 7 for purifying gases or liquids.

11. Use of the adsorption media/reaction media in piece form according to Claims 4 and 5, the apparatuses according to Claims 6 and 7, the water treatment plants according to Claim 8 and the waterworks according to Claim 9 for water treatment.

12. Use of the adsorption media/reaction media in piece form according to Claims 4 and 5, the apparatuses according to Claims 6 and 7, the water treatment plants according to Claim 8 and the waterworks according to Claim 9 for removing heavy metals, and phosphorus compounds, antimony compounds, beryllium compounds, selenium compounds, tellurium compounds, cadmium compounds, chromium compounds and cyano compounds from water.

13. Use of the adsorption media/reaction media in piece form according to Claims 4 and 5, the apparatuses according to Claims 6 and 7, the water treatment plants according to Claim 8 and the waterworks according to Claim 9 for removing arsenic compounds from water.

## Revendications

1. Procédé pour la préparation d'un adsorbant/agent de réaction, **caractérisé en ce que**
(a) des oxy-hydroxydes de fer de la phase α-FeOOH sont mélangés sous forme solide, semi-solide ou en suspension par addition de Fe(OH)₃ en suspension ou sous forme gélatineuse avec une teneur variable en eau, où le Fe(OH)₃ peut également être produit in situ à partir de solutions de sels de Fe(III) et par neutralisation, puis
(b1) soit la suspension est séchée avec obtention d'un état solide et le matériau solide est ensuite broyé mécaniquement sous la forme et/ou la grosseur souhaitées, soit
(b2) la suspension est soumise, le cas échéant après un préséchage, à l'état semi-solide à un façonnage mécanique et à un (autre) séchage consécutif avec obtention d'un état solide.

2. Procédé selon la revendication 1, **caractérisé en ce qu'**on utilise dans l'étape a), comme oxy-hydroxydes de fer de la phase α-FeOOH, des pigments jaunes d'oxy-hydroxyde de fer, qui sont préparés par précipitation d'hydroxydes ou de carbonates de fer (II) à partir de solutions correspondantes de sels de fer (II) sous forme pure ou sous forme de solutions de décapage dans la plage de pH acide ou alcaline et oxydation consécutive en oxy-hydroxydes de fer (III).

3. Procédé selon les revendications 1 ou 2, **caractérisé en ce qu'**on utilise, pour la précipitation du Fe(OH)₃ des sels de Fe³⁺ de la série des carbonates, chlorures, fluorures, nitrates, sulfates, sulfites.

4. Adsorbant de réaction en morceaux, préparé selon un procédé selon les revendications 1 à 3, **caractérisé en ce que** des aiguilles du type α-FeOOH sont collées les unes aux autres par de couches amorphes.

5. Adsorbant/agent de réaction en morceaux selon la revendication 4, **caractérisé en ce qu'**il s'agit, pour l'adsorbant/agent de réaction en morceaux, de corps façonnés.

6. Appareils dans lesquels des agents peuvent s'écouler, **caractérisés en ce qu'**ils contiennent l'adsorbant/agent de réaction en morceaux selon les revendications 4 et 5.

7. Appareils dans lesquels des agents peuvent s'écouler selon la revendication 6, **caractérisés en ce qu'**il s'agit, pour l'appareil, d'un adsorbant à écoulement.

8. Installations de traitement de l'eau, comprenant des appareils selon les revendications 6 ou 7.

9. Installations hydrauliques, comprenant des installations de traitement de l'eau selon la revendication 8.

10. Utilisation des adsorbants/agents de réaction en morceaux selon les revendications 4 et 5 et des appareils selon les revendications 6 et 7 pour l'épuration de gaz ou de liquides.

11. Utilisation des adsorbants/agents de réaction en morceaux selon les revendications 4 et 5, des appareils selon les revendications 6 et 7, des installations de traitement de l'eau selon la revendication 8 ainsi que des installations hydrauliques selon la revendication 9 pour le traitement de l'eau.

12. Utilisation des adsorbants/agents de réaction en morceaux selon les revendications 4 et 5, des appareils selon les revendications 6 et 7, des installations de traitement de l'eau selon la revendication 8 ainsi que des installations hydrauliques selon la revendication 9 pour l'élimination des métaux lourds ainsi que des composés de phosphore, d'antimoine, de béryllium, de sélénium, de tellure, de cadmium, de chrome et cyano de l'eau.

13. Utilisation des adsorbants/agents de réaction en morceaux selon les revendications 4 et 5, des appareils selon les revendications 6 et 7, des installations de traitement de l'eau selon la revendication 8 ainsi que des installations hydrauliques selon la revendication 9 pour l'élimination des composés d'arsenic de l'eau.
